Europäisches Patentamt

European Patent Office

Office européen des brevets

(11) Veröffentlichungsnummer: **0 237 938**
**A1**

(12) # EUROPÄISCHE PATENTANMELDUNG

(21) Anmeldenummer: **87103497.1**

(22) Anmeldetag: **11.03.87**

(51) Int. Cl.⁴: **C03C 8/22** , **C03C 27/06**

(30) Priorität: **15.03.86 DE 3608679**

(43) Veröffentlichungstag der Anmeldung:
**23.09.87 Patentblatt 87/39**

(84) Benannte Vertragsstaaten:
**DE FR IT NL**

(71) Anmelder: **Standard Elektrik Lorenz Aktiengesellschaft**
**Lorenzstrasse 10**
**D-7000 Stuttgart 40(DE)**

(72) Erfinder: **Schlipf, Michael, Dr.**
**Epplerinweg 31**
**D-7060 Schorndorf(DE)**

(74) Vertreter: **Pohl, Heribert, Dipl.-Ing et al**
**Standard Elektrik Lorenz AG Patent- und Lizenzwesen Postfach 30 09 29**
**D-7000 Stuttgart 30(DE)**

(54) **Kristallisierendes Glaslot.**

(57) Um Glasscheiben (1, 2) in einem bestimmten Abstand (A) miteinander zu verbinden, wird ein kristallisierendes Glaslot (3) verwendet. Dieses Glaslot enthält zum schnellen Kristallisieren einen Anteil von 0,25 bis 2% Kristallisationskeime. Vorteil: es kann auf Abstandsstäbchen, Glaskugeln oder ähnliche Teile im Glaslot verzichtet werden.

FIG.1

EP 0 237 938 A1

## Kristallisierendes Glaslot

Die Erfindung bezieht sich auf ein kristallisierendes Glaslot zum Verbinden von Glasscheiben.

Aus der DE-OS 27 09 140 ist ein Verfahren zum Strangpressen von Glaslot bekannt, das zum Verbinden von zwei Glasscheiben in einem bestimmten Abstand voneinander verwendet wird. Die Glasscheiben sind Bestandteil eines mit Wechselstrom betriebenen Gasentladungsbildschirmes. Das verwendete Glaslot besteht aus entglasbarem Glaslot, das bei Temperaturen um 450° C kristallisiert. Bei dem bekannten Verfahren bleibt der Abstand zwischen den Glasscheiben beim Verbinden derselben mit Hilfe des Glaslotstranges etwa in der Größenordnung des Durchmessers des Glaslotstranges erhalten, ohne daß besondere Abstandsstäbchen oder ähnliche Teile dem Glaslot zugefügt werden müssen.

Der Erfindung liegt die Aufgabe zugrunde, ein Glaslot zum Verbinden von Glasscheiben anzugeben, das ohne die Umwandlung in einen Glaslotstrang verwendet werden kann.

Die Lösung dieser Aufgabe erfolgt mit dem im Anspruch 1 angegebenen Mittel. Vorteilhafte Ausgestaltungen der Erfindung sind in den Unteransprüchen 2 bis 7 enthalten.

Die Erfindung wird nun anhand von in den Figuren gezeigten Ausführungsbeispielen näher erläutert. Es zeigen:

Fig. 1 den Schnitt durch zwei durch Glaslot miteinander verbundene Glasscheiben und

Fig. 2 den Schnitt durch zwei durch mehrere Schichten aus Glaslot miteinander verbundene Glasscheiben.

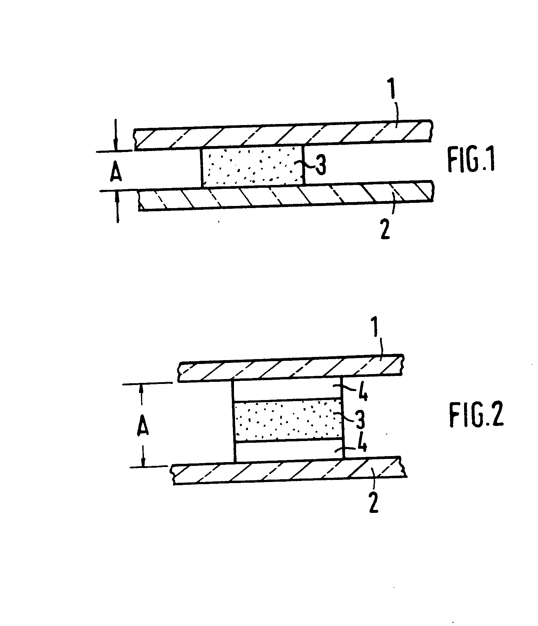

In Fig. 1 sind im Schnitt zwei Glasscheiben 1 und 2 dargestellt, die durch das kristallisierende Glaslot 3 in einem Abstand A miteinander verbunden sind. Das Glaslot 3 enthält einen erhöhten Anteil an Kristallisationskeimen, wodurch der Kristallisationsvorgang beschleunigt abläuft. Dadurch wird erreicht, daß das Glaslot beim Kristallisieren nicht wegfließt, sondern in etwa seine Form behält. Hierdurch bleibt der Abstand A zwischen den Glasscheiben 1 und 2 erhalten.

Die dem Glaslot 3 zugesetzten Kristallisationskeime können aus gemahlenem kristallisiertem Glaslot bestehen. Dabei ist es vorteilhaft, wenn das kristallisierte Glaslot und das Glaslot 3 vom gleichen Glastyp sind. Der Anteil an Kristallisationskeimen soll zwischen 0,25 und 2% liegen. Dabei ist vorzugsweise vorgesehen, daß der Anteil an Kristallisationskeimen 0,5 bis 1% beträgt. Der Anteil an Kristallisationskeimen bestimmt den Abstand A, wobei mit einem großen Anteil ein großer Abstand A erreicht werden kann.

Das Verbinden der beiden Glasscheiben 1 miteinander in einem bestimmten Abstand geht folgendermaßen vor sich:

Auf die eine Glasscheibe 1 oder auf beide Glasscheiben 1 und 2 wird an den dafür vorgesehenen Stellen das Glaslot 3 aufgebracht. Das Aufbringen des Glaslotes kann beispielsweise durch einen Siebdruck erfolgen. Das Glaslot wird dazu in üblicher Weise mit einem Binder, z.B. Nitrocellulose, vermischt. Anzumerken ist noch, daß das Glaslot den gleichen Ausdehnungskoeffizienten wie die miteinander zu verbindenden Glasscheiben 1, 2 aufweisen sollte.

Sollte durch das schnelle Kristallisieren des Glaslotes keine ausreichende Benetzung der Glasscheiben 1 und 2 erfolgen, so kann dieser Effekt durch einen Schichtenaufbau vermieden werden. In Fig. 2 ist ein Schnitt durch eine derartige Verbindung zweier Glasscheiben dargestellt. Auf jeder der Glasscheiben 1 und 2 ist eine Schicht aus Glaslot 4 ohne Zugabe von Kristallisationskeimen vorhanden. Zwischen diesem Glaslot 4 ist das Glaslot 3 mit den Kristallisationskeimen vorhanden. Mit dem Glaslot 4 wird eine gute Benetzung der Glasscheiben 1 und 2 erreicht, während durch das Glaslot 3 der gewünschte Abstand A der miteinander zu verbindenden Glasscheiben erzeugt wird.

Die Herstellung einer solchen Verbindung geschieht auf folgende Weise:

Auf die Glasscheibe 1 wird das Glaslot 4 dünn aufgetragen. Die Schichtdicke kann beispielsweise 50 um betragen. Je nach gewünschtem Abstand zwischen den Glasscheiben wird nun eine entsprechende Menge des Glaslotes 3 auf das Glaslot 4 aufgebracht. In gleicher Weise wird die zweite Glasscheibe 2 behandelt. Danach werden beide Glasscheiben 1 und 2 aufeinandergelegt und durch Zuführen von Wärme miteinander im Abstand A verbunden.

Um den Benetzungsgrad der Glasscheiben 1 und 2 mit dem Glaslot 4 zu steigern, kann das Glaslot 4 eine niedrigere Kristallisationstemperatur als das Glaslot 3 aufweisen. Hierdurch und durch geeignete thermische Prozeßführung wird erreicht, daß die Kristallisation und Glasbenetzung des Glaslots 4 schon bei niedrigeren Temperaturen als beim Glaslot 3 beginnt.

**Ansprüche**

1. Kristallisierendes Glaslot zum Verbinden von Glasscheiben, **dadurch gekennzeichnet,** daß das Glaslot (3) einen Anteil von 0,25 bis 2% Kristallisationskeime enthält.

2. Glaslot nach Anspruch 1, dadurch gekennzeichnet, daß der Anteil zwischen 0,5 und 1% liegt.

3. Glaslot nach Anspruch 1, dadurch gekennzeichnet, daß die Kristallisationskeime aus gemahlenem kristallisiertem Glaslot bestehen.

4. Glaslot nach Anspruch 3, dadurch gekennzeichnet, daß das kristallisierte Glaslot und das Glaslot (3) mit dem Anteil an Kristallisationskeimen dem gleichen Glastyp angehören.

5. Glaslot nach einem der vorhergehenden Ansprüche, dadurch gekennzeichnet, daß zwischen den Glasscheiben (1, 2) Glaslot (3, 4) in drei Schichten vorhanden ist und nur die innere Schicht aus dem Glaslot (3) mit den Kristallisationskeimen besteht.

6. Glaslot nach Anspruch 5, dadurch gekennzeichnet, daß das Glaslot (3) mit den Kristallisationskeimen eine höhere Kristallisationstemperatur aufweist, als das Glaslot (4) in den äußeren Schichten.

0 237 938

FIG.1

FIG.2

M. Schlipf 5
13. 3. 86

## EINSCHLÄGIGE DOKUMENTE

EP 87103497.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - B2 - 2 163 723 (OWENS-ILLINOIS, INC) <br><br> * Ansprüche 1-3,6; Spalte 3, Zeilen 30-59; Spalte 5, Zeilen 1-13 * <br><br> -- | 1,3,4 | C 03 C 8/22 <br><br> C 03 C 27/06 |
| X | US - A - 3 560 327 (MILLS) <br><br> * Zusammenfassung; Spalte 2, Zeilen 20-33 * <br><br> -- | 1,2 | |
| X | GB - A - 1 528 222 (INTERNATIONAL BUSINESS MACHINES CORPORATION) <br><br> * Ansprüche 1-3; Beispiel 1 * <br><br> ---- | 1,2 | |

**RECHERCHIERTE SACHGEBIETE (Int. Cl.4)**

C 03 C

H 01 J

C 04 B

Der vorliegende Recherchenbericht wurde für alle Patentansprüche erstellt.

| Recherchenort | Abschlußdatum der Recherche | Prüfer |
|---|---|---|
| WIEN | 12-06-1987 | HAUSWIRTH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82